Europäisches Patentamt

European Patent Office

Office européen des brevets

(11) Publication number: **0 205 245**
**A1**

(12) **EUROPEAN PATENT APPLICATION**

(21) Application number: 86303100.1

(22) Date of filing: 24.04.86

(51) Int. Cl.⁴: **B23D 61/12** , B27B 33/02 ,
B23D 71/04

(30) Priority: 11.06.85 GB 8514703

(43) Date of publication of application:
**17.12.86 Bulletin 86/51**

(84) Designated Contracting States:
**AT BE CH DE FR GB IT LI LU NL SE**

(71) Applicant: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al**
**Withers & Rogers 4 Dyer's Buildings Holborn**
**London EC1N 2JT(GB)**

(54) **Improvements in instruments with toothed cutting blades.**

(57) This invention relates to instruments with toothed cutting blades, and in particular, to non-rotary cutting instruments of this kind, such as saws, files, sickles and the like.

In particular a non-rotary cutting tool according to the invention has a toothed cutting blade in which the tooth spacing is closer at one or both ends than in the middle, so that the region or regions of closer spacing correspond to slower cutting speeds in normal use of the tool.

Fig. 1

EP 0 205 245 A1

# IMPROVEMENTS IN INSTRUMENTS WITH TOOTHED CUTTING BLADES.

The present invention relates to instruments with toothed cutting blades, and in particular, to non-rotary cutting instruments of this kind, such as saws, files, sickles and the like.

Usually the user of such an instrument selects one with a coarse or fine tooth spacing according to the nature of the material on which he is working. The tooth spacing is usually uniform from end to end of the instrument, or is in a uniformly repeating pattern along the length of the instrument, with, for example, larger gaps being left for the clearance of sawdust.

The present invention depends on the appreciation that the optimum tooth spacing of a cutting tool is related to cutting speed, and that in normal use, the cutting speed varies as the position of the tool blade relative to the work piece changes.

Therefore, according to the present invention, a non-rotary cutting tool has a toothed cutting blade in which the tooth spacing is closer at one or both ends than in the middle, the region or regions of closer spacing corresponding to slower cutting speeds in normal use of the tool.

The tooth spacing may be graded from one region to another, or the cutting edge may consist of a number of sections, each provided with teeth at a uniform spacing, different for the various sections. The depths of the teeth may be uniform throughout but preferably the depths are proportional to the spacing.

The invention will be further described with reference to the accompanying drawings in which:

Figure 1 is a hacksaw according to the invention.

Figures 3, 4a and 5a are hacksaw blades according to the invention.

Figures 4b and 5b are files according to the invention.

Figure 6 is a sickle according to the invention.

Figure 7 is a hacksaw blade according to the invention.

Figures 8 and 9 are handsaws according to the invention.

Figure 10 is a bow saw according to the invention.

Reference Figures A and B illustrate mechanical and manual hacksaws in use, together with diagrams showing speeds of operation, and Reference Figure C shows the tooth arrangement of a prior art timber saw.

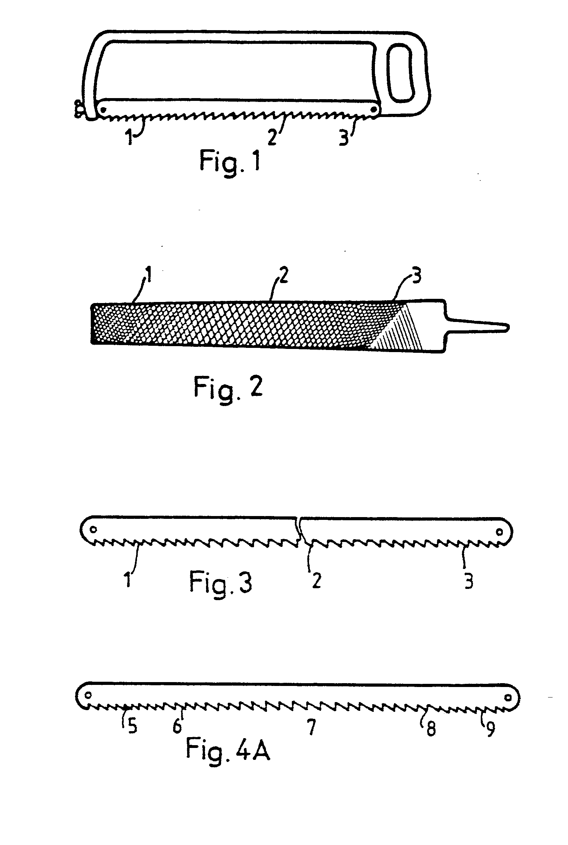

Referring now to the drawings, Figure 1 shows a hacksaw, the blade of which has closely spaced teeth 1 at the end towards the tension nut, increasing gradually to a much wider tooth spacing and size towards the middle of the blade 2, and again diminishing in size and spacing towards the handle 3.

Figure 2 shows a file having a similar gradation of tooth spacing, being close towards the tip 1, wider in the middle 2, and close again in the region 3 near the handle tang.

Figure 3 shows a sawblade for use in a reciprocating mechanical saw bench such as is shown in Reference Figure A. The speed of movement of the saw over the work varies sinusoidally, as is shown in the small sketch in Reference Figure A, and the tooth spacing and depth in Figure 3 vary in correspondence with this being finest at the ends 1 and 3 and coarsest in the middle 2.

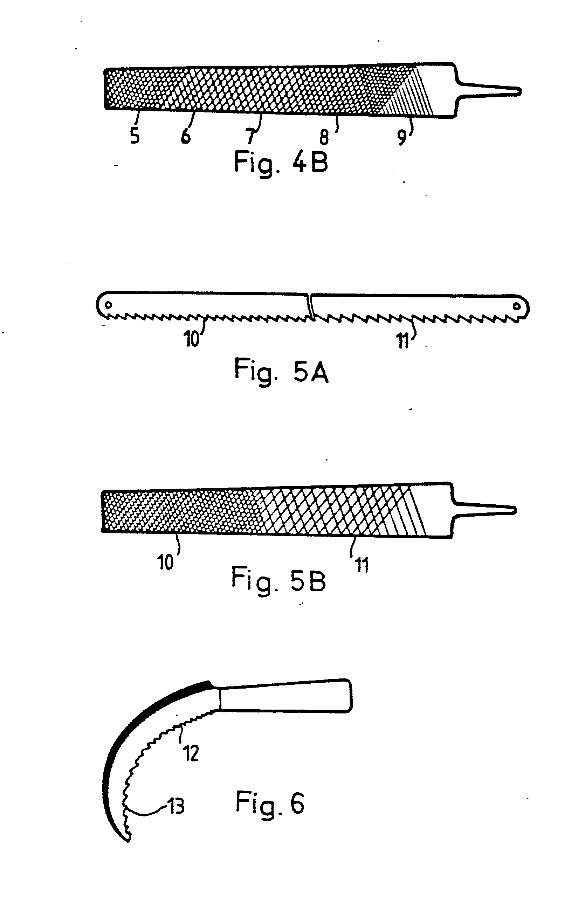

Figure 4a shows a saw blade in which the teeth are in five sections, 5,6,7,8 and 9, the spacing being uniform within each section but diminishing from the outer section 5 through the intermediate section 6 to the central section 7, which is coarsest, and then becoming finer through the intermediate section 8 to the other end section 9. Figure 4b shows a precisely similar principle as applied to a file, each section being correspondingly numbered.

Figures 5a and 5b show a simplified form of the invention, in which there only two difference spacings, as applied respectively to a sawblade and a file. In each case the section 10, further from the handle has finer teeth, and the section 11 nearer the handle has coarser teeth.

Figure 6 shows the invention as applied to a sickle. In this case the arrangement of the teeth is the reverse of that shown in Figures 5a and 5b because of the different manner of use of the tool, the faster cutting speed being at the beginning of the stroke, which starts near the handle, therefore the finer teeth 12 are nearest to the handle, and the coarser teeth 13 further from it.

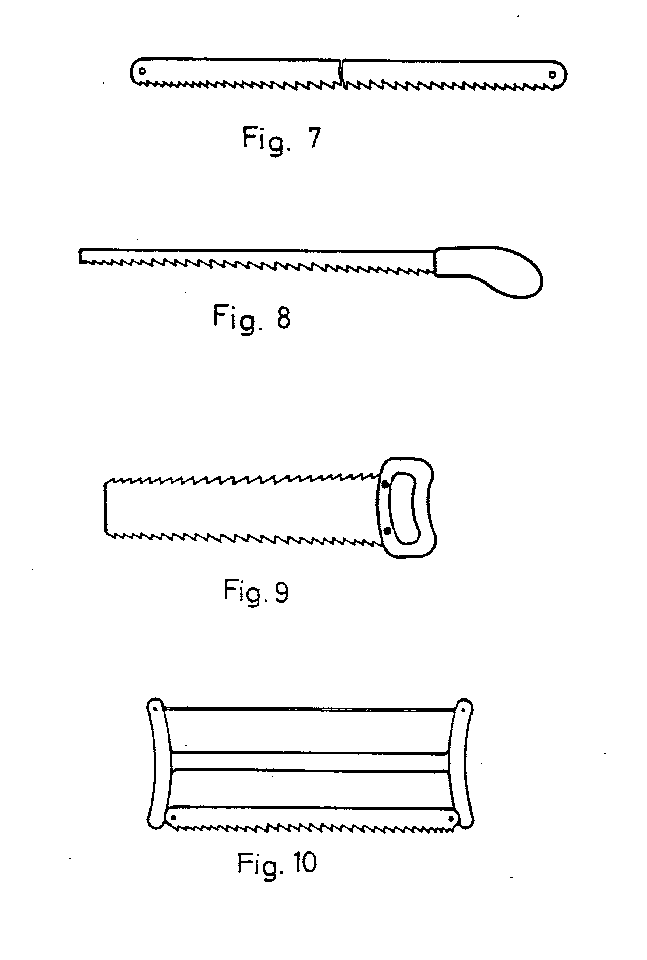

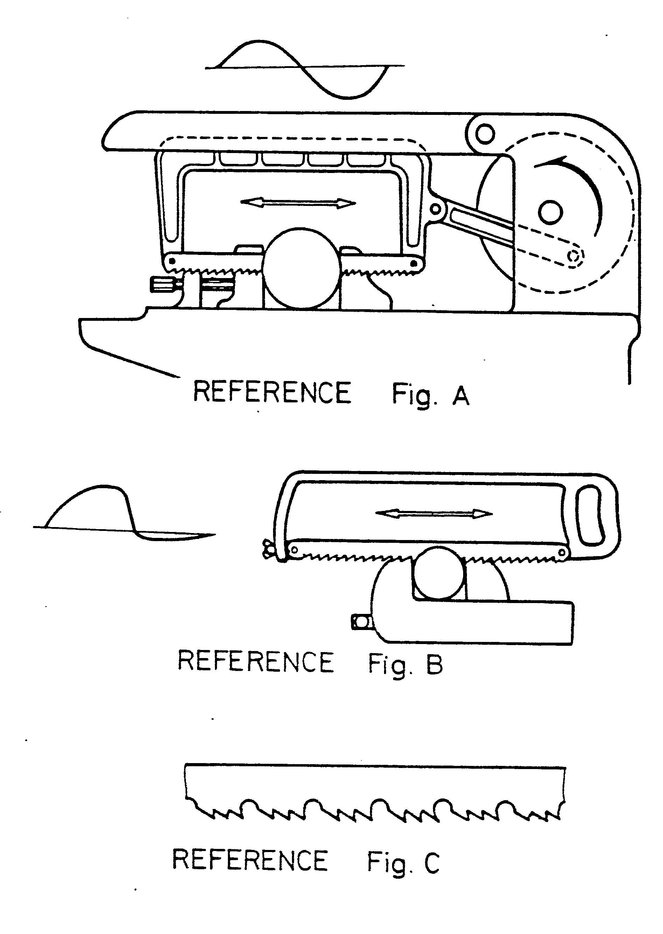

Figure 7 shows a saw blade in which the tooth spacing is graded, but the more widely spaced teeth are correspondingly deeper, so that the tooth shape is similar throughout.

Figure 8 shows a keyhole saw, Figure 9 a double edged handsaw, and Figure 10 a bow saw, all employing the present invention.

## Claims

1. A non-rotary cutting tool having a toothed cutting blade in which the tooth spacing is closer at one or both ends than in the middle, the region or regions of closer spacing corresponding to slower cutting speeds in normal use of the tool.

2. A tool according to claim 1 in which the teeth are arranged in sections, the tooth spacing within each section being uniform.

3. A tool according to claim 1 or claim 2 in which the depths of the teeth are proportional to their spacing.

4. A cutting tool substantially as shown in and as herein described with reference to any of Figures 1 to 10 of the accompanying drawings.

0 205 245

Fig. 1

1  2  3

Fig. 2

1  2  3

Fig. 3

1  2  3

Fig. 4A

5  6  7  8  9

0 205 245

Fig. 4B

5    6    7    8    9

Fig. 5A

10    11

Fig. 5B

10    11

12

13    Fig. 6

0 205 245

Fig. 7

Fig. 8

Fig. 9

Fig. 10

REFERENCE   Fig. A

REFERENCE   Fig. B

REFERENCE   Fig. C

## DOCUMENTS CONSIDERED TO BE RELEVANT

EP 86303100.1

| Category | Citation of document with indication, where appropriate, of relevant passages | Relevant to claim | CLASSIFICATION OF THE APPLICATION (Int. Cl.4) |
|---|---|---|---|
| X | US - A - 1 392 050 (DRAGON) <br> * Fig. 1 * | 1,3 | B 23 D 61/12 <br><br> B 27 B 33/02 <br><br> B 23 D 71/04 |
| X | DE - C - 497 399 (OTTO HESSE) <br> * Totality * | 1,3 | |
| X | GB - A - 934 238 (W. WOLSEY) <br> * Totality * | 1,2 | |
| A | US - A - 1 106 536 (J.H. BARKER) <br> * Totality * | 2,3 | |
| A | AT - B - 43 456 (BERGISCHE FEILEN-INDUSTRIE) <br> * Totality * | 2,3 | **TECHNICAL FIELDS SEARCHED (Int. Cl.4)** |
| X | US - A - 3 805 383 (MC NALLY) <br> * Fig. 1,3,4 * | 1,3 | B 23 D 49/00 <br> B 23 D 61/00 <br> B 23 D 71/00 |
| X | US - A - 1 214 589 (A. RASMUSSEN) <br> * Totality * | 1,2,3 | B 23 D 73/00 <br> B 27 B 33/00 |
| A | US - A - 1 512 625 (J.F. MILLER) <br> * Totality * | 2,3 | |
| X | GB - A - 294 139 (F.A. BERGER) <br> * Totality * | 1,3 | |

The present search report has been drawn up for all claims

| Place of search | Date of completion of the search | Examiner |
|---|---|---|
| VIENNA | 03-09-1986 | NIMMERRICHTER |

European Patent Office

**EUROPEAN SEARCH REPORT**

Application number

| DOCUMENTS CONSIDERED TO BE RELEVANT | EP 86303100.1 |

| Category | Citation of document with indication, where appropriate, of relevant passages | Relevant to claim | CLASSIFICATION OF THE APPLICATION (Int. Cl.4) |
|---|---|---|---|
| A | US - A - 2 534 424 (E. DRYDEN)  <br> * Fig. 1 *  <br>  ---- | 1,3 | |

TECHNICAL FIELDS SEARCHED (Int. Cl.4)

The present search report has been drawn up for all claims

| Place of search | Date of completion of the search | Examiner |
|---|---|---|
| VIENNA | 03-09-1986 | NIMMERRICHTER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503 03 82